# EUROPEAN PATENT SPECIFICATION

(11) **EP 3 017 926 B1**
(45) Date of publication and mention of the grant of the patent: **13.06.2018**
(21) Application number: 15003207.6
(22) Date of filing: 09.11.2015
(51) Int. Cl.: B29B 17/00, B08B 3/04, B29B 17/02

(54) **ASSEMBLY FOR THE CLEANING OF GRANULATED MATERIAL**
ANORDNUNG ZUR REINIGUNG VON GRANULIERTEM MATERIAL
ENSEMBLE POUR LE NETTOYAGE DE MATIÈRE GRANULÉE

(30) Priority: 07.11.2014 GR 20140100566
(43) Date of publication of application: 11.05.2016
(73) Proprietor: Skeberis S.A., 57022 Thessaloniki (GR)
(72) Inventor: Skeberis, Christos, 57022 Thessaloniki (GR)
(74) Representative: Malamis, Alkisti-Irene

(56) References cited:
- EP-A2- 0 359 106
- EP-A2- 0 492 043
- KR-A- 20060 114 885
- KR-A- 20130 131 700

## Description

### Field of the invention

This invention relates to the field of recycling of packagings which contain chemicals, which packaging items need to be thoroughly cleaned in order to enable the re-use of their materials.

### State of the art

Nowadays, in order to achieve the recycling of packaging items which have contained heavy chemicals and hazardous material for human health e.g. pesticides, one must first clean these packaging items separately by washing and disinfectiing them.. In order for the washing and disinfecting to be efficient, it is not enough that these are done only with water. The need for the removal of the pesticide residuals and of other heavy chemical products from each packaging item before this can be recycled, makes impossible the large scale recycling and the re-use of this material, which is usually plastic.

Namely, there arises the problem that in large scale recycling we do not wish and it is also not possible that each packaging item that is intended to be re-cycled will first be washed separately, for the removal of strong chemicals, as in the case of pesticides or chemicals for industrial use, because this demands high costs, i.e., a lot of labour force and a lot of time. Furthermore, the result will not be stable, because it will depend on the human factor and on how well and systematically the persons dealing with the cleaning have done their job.

Consequently, there arises the need for an automated cleaning procedure for the cleansing of the packaging items which have contained hazardous chemical products like pesticides, which procedure will give he desirable result always stable and with certainty. It should be possible that this procedure is able to be performed at a large scale, so that the cost can be manageable and so that the whole venture may benefit from economies of scale.

### Brief description of the invention

The present invention describes for the first time an assembly which enables the cleansing of plastic packaging items which have contained pesticides and other chemicals, so that these packaging items may be further used and recycled. The assembly of the present invention makes it possible, due to its design, that the cleaning procedure may be repeated always with the same results if the procedures and method described below are observed. Further, the assembly of thes present invention provides the possibility of cleaning large quantities of packaging items simultaneously and also provides the possibility of efficient washing with the use of detergents and disinfectant materials for the removal of residuals of pesticides and other chemicals. The operation of the assembly of the presentinvention is simple and safe, contact between humans and the materials cleaned is not needed. The plastic items that have been cleaned with the assembly and the method of the present invention are ready for recycling and further use.

More specifically:
The assembly of the present invention for the cleaning of packaging items that have been used for chemicals and pesticides, wherein the packaging items have been initially reduced to smaller pieces, i.e. granules, comprises consecutively
- a washing structure with at least three mixing and conveying shafts, for the washing of the granules with a chemical cleaning fluid,
- brushes for the cleaning of the granules,
- a conveyor screw for the transportation of the granules from the brushes to a water washing structure,
- a water washing structure,
- a conveyor screw for the transportation of the granules from the water washing structure to a centrifugal drainer,
- a horizontal centrifugal drainer for the granules,
- an air-transportation heated system for the transportation of the granules from the drainer to their collection,
- a cyclone for the collection of the cleaned granules.

EP0492043 discloses a washing structure with at least three mixing and conveying shafts, a water washing structure, a centrifugal drainer and an air-transportation heated system for the transportation of the granules; neverthelss, the granules may not be sufficiently cleaned by use of this structure because the remains of chemicals etc, cannot be effectively removed. The latter is achieved by the use of brushes that are disclosed for the first time in the present invention. Moreover, the structure described in EP0492043 may not process large amounts of granules at an industrial scale because an air-transportation heated system is used alone for the transportation of granules; large quantities of granules have large weight and consequently these may not be transported simply by air. The present invention uses a conveyor screw for the transportation of the granules and a screw is used for such transportation in more than one locations for the same purpose.

EP 0359106 also discloses a washing structure and a water washing structure, but no one of the essential features disclosed herein are included, like the brushes and the conveyor screw.

It is preferable that in this assembly , in the washing structure with the mixing and conveying shafts for the washing of the granules with a chemical cleaning fluid
- the shafts bear reels, which in turn have flaps,
- part of each shaft during its rotation is below the surface of the cleaning fluid and part is above the surface,
- the first shaft has heating elements, or below the first shaft are heating elements, which heat the cleaning fluid,
- at least one shaft transports the granules and after this first shaft there is at least a second shaft that plunges the granules into the water in a manner that the granules shall not float in order for a better washing to be achieved.
- the last shaft has flaps with projections having the shape of a rake and removes the granules from the fluid's surface.

Preferably, in the assembly of the present invention the washing structure with the mixing and transportation shafts, for the washing of the granules with chemical cleaning material,
- comprises five shafts and
   - the first shaft for the transportation of fluid and granules is followed by a shaft for the plunging of the granules and both shafts have compact flaps,
   - after that there is a new transportation shaft and new plunging shaft, both of which have perforated flaps which allow the fluid to pass through their apertures,
   - the last shaft has on its flaps, at an angle, projected shafts with the shape of a rake that remove the granules from the surface of the fluid without removal of fluid from the washing structure.

Advantageously, in the present assembly the movement of the shafts is alternating with direction from the first to the last shaft and then reversely with direction from the last to the first shaft of the washing structure and specifically with consecutive alternations.

In this assembly, the brushes for the cleaning of the granules
- are at least two,
- each one rotates around a shaft, and the shafts of two consecutive brushes rotate in an opposite direction, the one in respect to the other and
- they brush the granules for the removal of possible label residues, which have become soft through their course through the washing structure.

In this assembly the screw that removes the granules after the brushing and transports them to the water washing structure has direction from down upwards, in such a manner so that the material may fall from above downwards inside the water washing structure.

Preferably, in this assembly the water washing structure comprises three shafts and each one of them bear reels with flaps from which
- the first shaft has compact flaps and propels the material inside the water and it stirs it
- the second shaft has perforated flaps and stirs and plunges the material with a lower friction and
- the third shaft has on its flaps, shafts projected at an angle, in the shape of a rake, so that they may propel the granulated plastic to the outlet with the lowest possible simultaneous removal of fluid from the reservoir,
- the direction of movement of the shafts alternates consecutively form the inlet to the outlet.

Preferably, in this assembly the screw which removes the granules and transports them from the water washing structure to the horizontal centrifugal drainer, has direction from down upwards.

Furthermore, in the present invention the transportation system for the clean material from the centrifugal drainer to its collection comprises
- the application of hot air for drying and
- pipework not only in a straight line, but with multiple curves in a "zigzag" pattern and / or in a helix shape, for a longer drying duration.

Preferably, the assembly of this invention ends with a collection bin of the granulated plastic, that may comprise a cyclone and a collection bag.

### Description of Figures

Figure 1 shows a sample of a washing structure for the washing of the granules with a chemical cleaning fluid, that comprises five shafts and constitutes the first stage of the assembly of the present invention.
Figure 2 shows the reservoir of the washing structure for the washing of the granules with a chemical cleaning fluid , where the granulated plastic material initially enters.
Figure 3 shows five reels that rotate around shafts, which reels have as object to stir and to propel the granulated plastic material from the inlet of the washing structure to the outlet.
Figure 4 shows the inclined transportation screw which transports the granulated plastic material from the brushes to the water washing structure.
Figure 5 shows the water washing structure (water washing-mashine), to which the inclined transportation screw transports the granulated plastic material from the brushes.
Figure 6 shows the three reels, which have as their object to stir and to propel the granulated plastic material from the inlet to the outlet of the water washing structure.
Figure 7 shows the horizontal centrifugal drainer.
Figure 8 shows the external encasement of the horizontal centrifugal drainer.
Figure 9 shows the rotation system of the horizontal centrifugal drainer that comprises a hexagonal shaped drum, on which blades are welded at such an angle so that they hit and simultaneously propel the granulated plastic material to the outlet.
Figure 10 shows the heated air-transportation system of the cleaned granulated plastic material.
Figure 11 shows the cyclone with the appropriate truss (holding base) for the big bag.
Figure 12A shows the cyclone which is the last part of the processing line of the granulated plastic material and where the granulated plastic material ends up after the air-transportation.
Figure 12B shows the lower part of the cyclone, where there is a neck where the big bag is fastened and at its lower part there is a butterfly-type valve that permits the interruption of the flow to the big bag and its temporary removal until the changing of the big bag.
Figure 13 shows the truss which supports the big bag, which hangs from the trusse's four hooks and it is fastened to the neck of the cyclone, while the truss is also the support base of the cyclone which is placed on it.

### Detailed description of the invention

The invention is described with the following embodiment with the following stages with reference to the figures, however all these must be considered as an indicative example and not restrictively.

### i. WASHING STRUCTURE FOR THE CLEANING WITH CHEMICAL

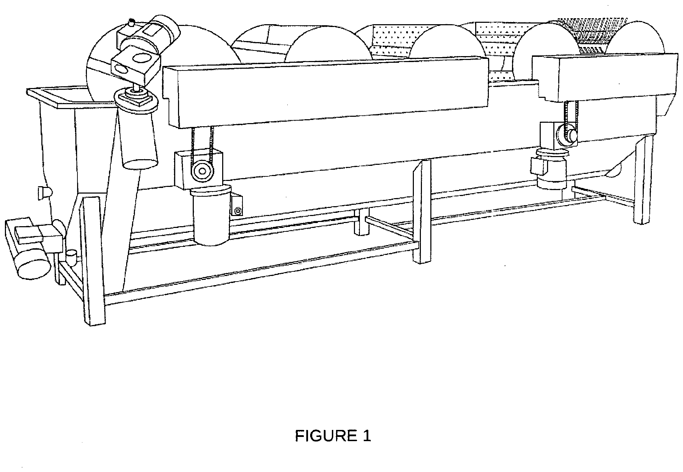

The washing structure for the cleaning with chemical, that is shown in Figure 1 may comprise:

### A) Reservoir

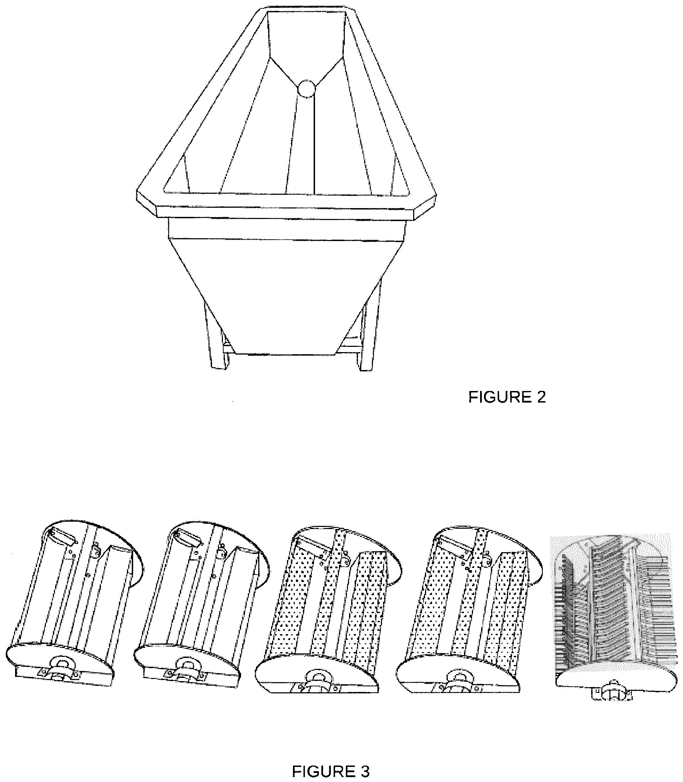

The reservoir (tank) (Figure 2) is the space into which the granulated plastic initially enters. The reservoir is full of water with diluted chemical, so that every plastic granule can be cleaned.

According to one embodiment of the invention the reservoir may be manufactured from steel sheet INOX 316L with thickness of 3mm so that it can withstand corrosion that other materials, which are not resistant to acids, are subjected to. The support base of the reservoir in our example is made from stainless steel hollow beams, which are welded between them and with the reservoir. Furthermore, their dimensions are such, so as to withstand to the loads and stresses that will be created during its function.

### B) Reels

The washing structure in the present example has five shafts, around of which reels are rotating (Figure 3). The reels stir and propel the granulated plastic from the inlet of the washing structure at its one end towards the outlet at its other end.

It is preferable that the reels are manufactured with INOX 316L so that they can withstand corrosion that other materials are subjected to, which are not resistant to acids.

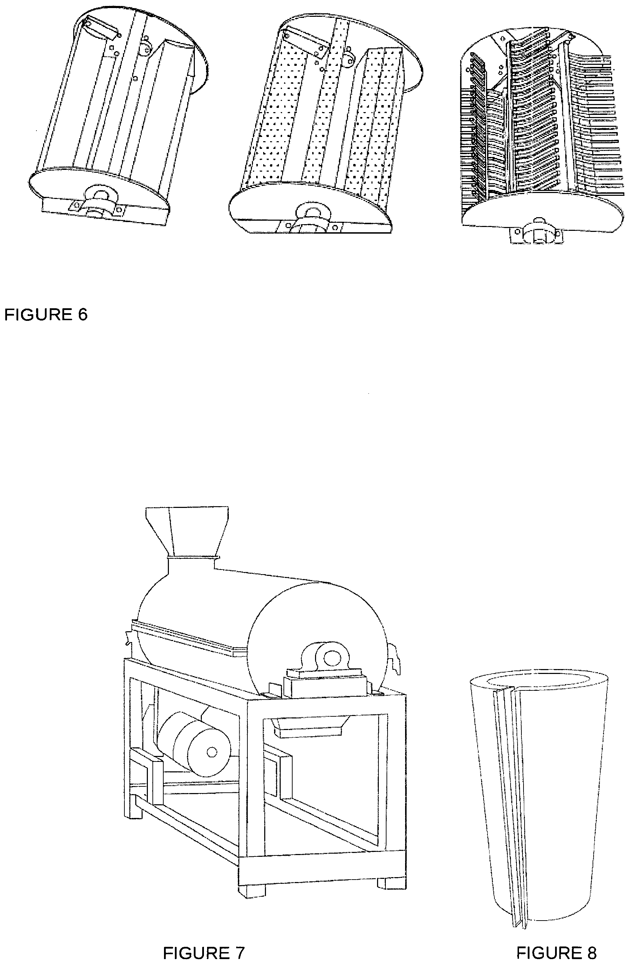

Every reel comprises two flanges, e.g. ϕ600mm, on which six flaps are screwed as shown in the example in figure 6, whereas at the center there are ϕ 50mm shafts which are supported with heavy load type (omega) bearing housings.

The first two reels comprise of six flaps each, from stainless steel sheet at an angle, so that they can stir with higher pressure the granulated plastic, so that it may reach higher depth inside the reservoir and with higher friction compared to the other two reels that follow.

The next two reels that follow comprise of six flaps each, from perforated sheet with ϕ8mm apertures at an angle, so that they can stir the granulated plastic with a smaller coefficient of friction and with a smaller propulsion material velocity, in order that it decelerates so it can stay inside the fluid for longer time until it will reach the last reel.

The last reel comprises six flaps as well. Every flap comprises a blade on which ϕ12mm shafts are placed at an angle, so that they propel the granulated plastic towards the outlet with the least possible simultaneous removal of fluid from the reservoir.

The above reels may comprise more or less than six flaps each, the number of flaps described herein is chosen for the specific example that is presented in the present and is only indicative.

Transmission to the reels is given in the present example from two 2HP motor at 400VAC∼50Hz with inverter motor drive, so that the speed of the motor can be regulated. The first motor has a coupled gear and the transmission to the three first reels is made through a transmission chain. The second motor has a coupled gear and the transmission to the last two reels is made through a transmission chain. In both cases there are appropriate safety guards for the protection of moving parts as required.

The whole structure has easy maintenance, since all the parts of the reel are fastened with screws and are not compacted, therefore they can easily be detached and changed in case the constructor thinks appropriate.

### C) Waste and sludge removal system

The washing structure with chemical material comprises a system which removes the waste and sludge, which includes two transportation screws.

The first is a horizontal screw ϕ140mm and its scope of operation is the transportation of waste and sludge from the lower part of the reservoir to the inclined transportation screw. It is preferably manufactured from stainless steel and is located at the lower part of the reservoir of the washing structure that contains the granulated plastic material inside the water with the diluted cleaning chemical. The screw, from one side is supported on a bearing housing that it is located inside the reservoir. The bearing housing is made from Teflon PTFE in order to be resistant to chemicals and friction. From the other side it is supported outside from the reservoir at a bearing housing made from stainless steel which is mounted with screws on a flange screwed on the reservoir. Transmission is given from an electrical motor 1HP at 400VAC∼50Hz.

The second is an inclined screw ϕ135mm, that receives the waste and sludge from the first one and its scope of operation is to transport them outside of the reservoir. It is manufactured from stainless steel and it is located outside and at the side of the reservoir and it is connected with the other transportation screw at the lower part. The external casing is from a tube ϕ140mm. The screw is supported from one side on a bearing housing which is located at the inner part. The bearing housing is made from Teflon PTFE, in order to be resistant to chemicals and friction. From the other side it is supported from the outer side, on a bearing housing from cast iron, while the bearing is from stainless steel, which is mounted with screws on a flange screwed on the reservoir. Transmission is given from electrical motor 1HP at 400VAC∼50Hz.

The whole structure has easy maintenance since as mentioned above all the parts of the reel are fastened with screws and are not compacted, therefore they can easily be detached and changed in case the constructor thinks appropriate.

### ii. CLEANING BRUSHES

The stage with the cleaning brushes has as its aim of operation the removal of the papers glued on some of the plastic granules, that remain glued.

The cleaning brushes are at least two in all and are located at the outlet of the washing structure with chemical as shown in Figure 1, inside a chamber and their transmission is given by an electrical motor 0,50HP at 400VAC∼50Hz. In our example they are coupled on two shafts and shafts are supported on bearing housings from Teflon PTFE, so they can be resistant to chemicals and friction. The transmission from one shaft to the other is done with gears. The direction of rotation of the shafts is reverse for every couple of brushes, so that the best brushing of the granulated material can be achieved. The whole structure has easy maintenance since as mentioned above all the parts of the reel are fastened with screws and are not compacted, therefore they can easily be detached and changed in case the constructor thinks appropriate.

### iii. TRANSPORTATION SCREW FROM THE BRUSHES TO THE WATER WASHING STRUCTURE

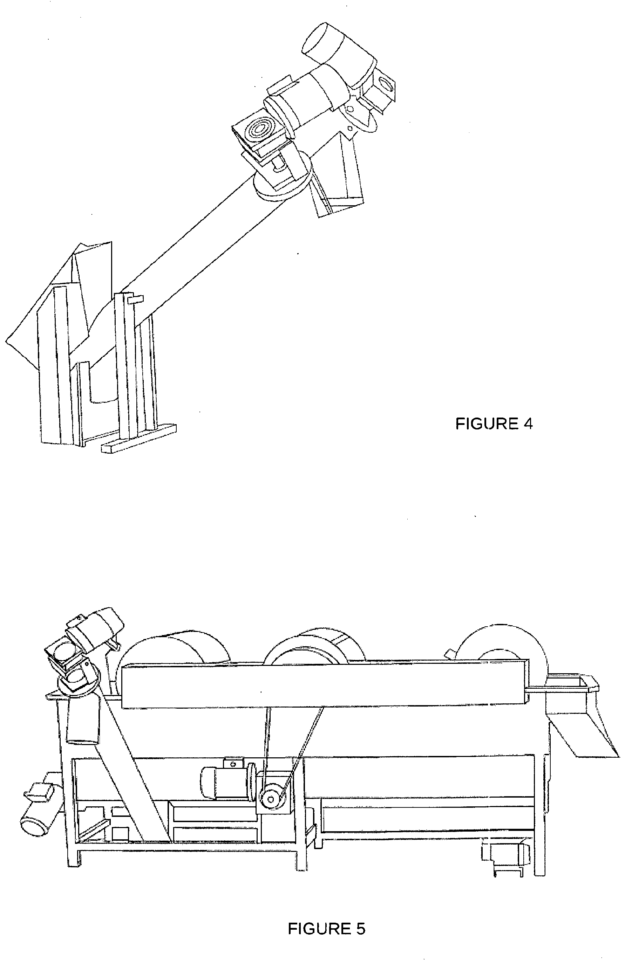

The transportation screw shown in Figure 4, has as its aim of operation the transportation of the granulated plastic material from the brushes to the water washing structure.

The screw is located below the cleaning brushes and in our example it comprises:
- The inlet hopper for the material, made preferably by stainless steel sheet, wherein at its lower part there are perforated parts for the removal of water, so that the material can move from the hopper to the screw.
- The casing of the screw which is made preferably by a stainless steel tube ϕ140mm, which has at its back side a perforated door, for the cleaning of the screw and for the removal of the water during function.
- The ϕ135mm screw which is made preferably by stainless steel and is supported at the lower part on bearing housing which is located inside. The bearing housing is made from Teflon PTFE, in order to be resistant to chemicals and friction. At the upper part it is supported from the outer side, on a bearing housing from cast iron, while the bearing is from stainless steel, which is mounted with screws on a flange screwed on the reservoir. Transmission is given from electrical motor 1HP at 400VAC∼50Hz.
- The water collection bin which is located exactly beneath, which has on its upper part a wire mesh in order to hold the material and at the lower part is connected to water pump made of stainless steel, which it pumps back to the washing structure, while for its protection it has a level sensor which determines when it functions.

The whole structure has easy maintenance since as mentioned above all the parts are fastened with screws and are not compacted, therefore they can easily be detached and changed in case the constructor thinks appropriate.

### iv. WATER WASHING STRUCTURE

The water washing structure (Figure 5) in our example comprises:

### A) Reservoir

The reservoir is the space into which the granulated plastic material is inserted from the screw after the brushes. The reservoir is filled with water and its aim of operation is the removal of the chemical from the granulated plastic material. It is manufactured preferably from stainless steel INOX 304 sheet with thickness 2,5mm. The support of the reservoir is preferably made from stainless steel hollow beams which are welded to the reservoir. Furthermore, their dimensions are such to withstand to the loads and stresses that will be created during its function. The water washing structure reservoir in our present example could be like the structure shown in Figure 2.

### B) Reels

The washing structure in our exqample has three reels (Figure 6), which stir and propel the material from the inlet to the outlet of the water washing structure. They are preferably made from stainless steel INOX 304.

Each reel comprises preferably two flanges cp500mm, on which preferably four flaps are screwed, whereas in the center there are placed cp40mm shafts which are supported on heavy load (omega type) bearing housings.

The first reel comprises of four flaps, from metal sheet at an angle, so that it can stir with higher pressure the granulated plastic material with the result that it reaches higher depth inside the reservoir and with higher friction in relation with the next two reels that follow.

The next reel comprises four flaps, from perforated metal sheet with ϕ8mm apertures at an angle, so that it may stir the granulated plastic material with a smaller coefficient of friction and with a smaller propulsion material velocity, so that it decelerates so it can stay inside the fluid for longer time until it will reach the last reel.

The last reel comprises four flaps as well. Every flap comprises a blade on which blades with dimensions 15mm x 5mm are mounted at an angle, so that they may propel the granulated plastic material towards the outlet with the least possible simultaneous removal of fluid from the reservoir.

The above mentioned reels may comprise more than four flaps or less than four flaps each, the specific number of flaps was chosen for the specific example that is shown in this invention and it is only indicative.

Transmission to the reels is given in our example from one electrical motor 2HP at 400VAC∼50Hz with inverter motor drive, so that the speed of the motor can be regulated. The motor has a coupled gear and the transmission to the three reels is done through a transmission chain. Finally, there are appropriate safety guards for the protection of moving parts as required.

The whole structure has easy maintenance since as mentioned above all the parts of the reel are fastened with screws and are not compacted, therefore they can easily be detached and changed in case the constructor thinks appropriate.

### C) Waste and sludge removal system

The waste and sludge removal system from the water washing structure in our case comprise two transportation screws.

The first screw is a horizontal screw ϕ140mm and its aim of operation is the transportation of waste and sludge from the lower part of the reservoir to the inclined transportation screw. It is manufactured from stainless steel and is located at the lower part of the reservoir. The screw, is supported from one side at a bearing housing that is located inside the reservoir. The bearing housing is made from Teflon PTFE in order to be resistant to chemicals and friction. From the other side it is supported outside the reservoir at a bearing housing made from stainless steel which is mounted with screws on a flange screwed on the reservoir. Transmission is given from an electrical motor 1HP at 400VAC∼50Hz.

The second screw is an inclined screw ϕ135mm, that receives the waste and sludge from the first one and its aim of operation is to transport them outside of the reservoir. It is manufactured from stainless steel and it is located at the side, outside of the reservoir and it is connected with the other transportation screw at the lower part. Its external casing is from a tube ϕ140mm. The screw is supported from one side on a bearing housing which is located at the inner part. The bearing housing is made from Teflon PTFE, in order to be resistant to chemicals and friction. From the other side it is supported from the outer side, on a bearing housing from cast iron, while the bearing is from stainless steel, which is mounted with screws on a flange screwed on the reservoir. Transmission is given from electrical motor 1HP at 400VAC∼50Hz.

The whole structure has easy maintenance since as mentioned above all the parts of the reel are fastened with screws and are not compacted, therefore they can easily be detached and changed in case the constructor or an authorized collaborator thinks appropriate.

### v. TRANSPORTATION SCREW FROM THE WATER WASHING STRUCTURE TO THE CENTRIFUGAL DRAINER

This transportation screw is similar to the screw shown in Figure 4, and its aim of operation is the transportation of the granulated plastic material from the water washing structure to the horizontal centrifugal drainer.

It is located at the outlet of the water washing structure and comprises :
The inlet hopper for the material, made preferably by stainless steel sheet, which at its lower part has perforated parts for the removal of water, so that the material can move from the hopper to the screw.
- The casing of the screw, which is made preferably from a stainless steel tube ϕ140mm, which has at its back side a perforated door, for the cleaning of the screw and the removal of the water during function.
- The ϕ135mm screw which is made preferably by stainless steel and is supported at the lower part on bearing housing which is located inside. The bearing housing is preferably made from Teflon PTFE, in order to be resistant to chemicals and friction. At the upper part it is supported from the outer side, on a bearing housing from cast iron, while the bearing is from stainless steel, which is mounted with screws on a flange screwed on the reservoir. Transmission is given from electrical motor 1HP at 400VAC∼50Hz.
- The water collection bin which is located beneath, which has on its upper part a wire mesh in order to hold the material and at the lower part is connected to water pump made of stainless steel, which it pumps back to the washing structure, while for its protection it has a level sensor which determines when it functions.

The whole structure has easy maintenance since as mentioned above all the parts are fastened with screws and are not compacted, therefore they can easily be detached and changed in case the constructor thinks appropriate.

### vi. HORIZONTAL CENTRIFUGAL DRAINER

The horizontal centrifugal drainer (Figure 7) comprises:

### A) Truss

On the truss of the horizontal centrifugal drainer are supported all its parts. In our specific example it is manufactured preferably from stainless steel INOX 304 hollow beams which are welded between them. Furthermore, their dimensions are such to withstand to the loads and stresses that will be created during its operation.

### B) External casing

The external casing has cylindrical shape (Figure 8) and it is dividable into two parts. In our example it is manufactured by stainless steel INOX 304. It's aim of operation is to hold the water that is removed from the perforated bin, its collection and its removal from the lower part, removed through a tube.

Lengthwise, and from each side there are clips for the release of the upper part of the external casing, which is moved easily due to the handles that it has. The lower part of the external casing is screwed to the truss of the horizontal centrifugal drainer.

### C) Internal perforated drum

The internal drum has cylindrical shape, it is perforated with apertures ϕ1,5mm and it is dividable. It is manufactured from stainless steel INOX 304.

It's aim of operation is to hold the granulated plastic material and to simultaneously remove the water. This is done with the centrifugation that creates the rotation system. At its side there are clips for the release of the drum, which can be easily detached and cleaned.

### D) Rotation system

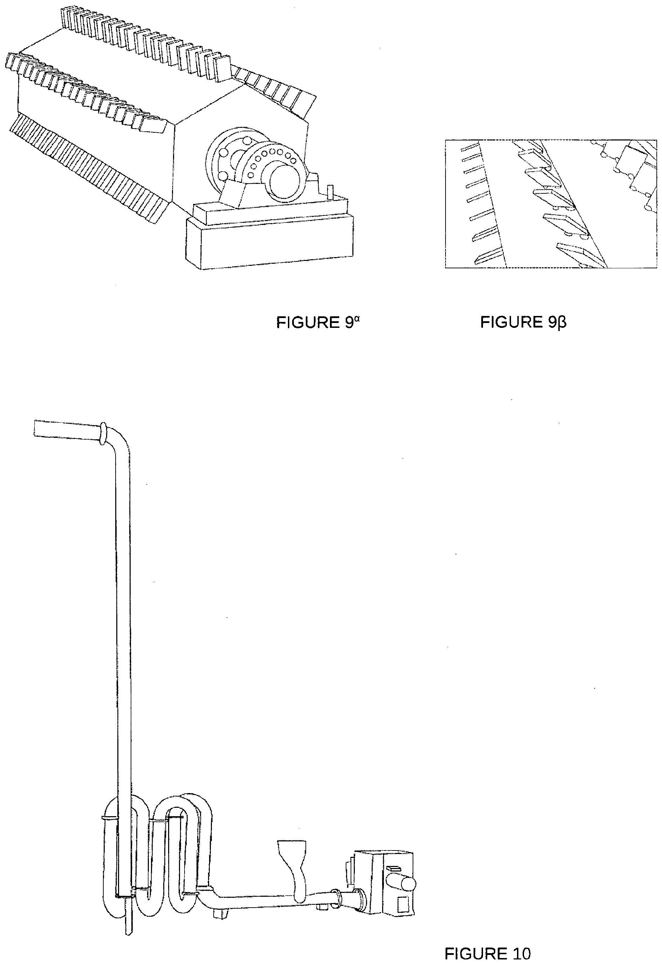

The rotation system (Figure 9) preferably comprises an hexagonal shaped drum, on which are welded blades with dimensions e.g., 25mm x 8mm, at such an angle so that they will hit and simultaneously propel the granulated plastic material towards the outlet. It is manufactured, preferably from stainless steel INOX 304.

The drum is supported on two shafts ϕ60mm. The shafts are supported on heavy type (omega) bearing housings. At the extension of a shaft, a pulley is coupled. Transmission is given to the pulley through an electrical motor 10 HP at 400VAC∼50Hz. Transmission is done with three belts.

The aim of operation of the rotation system is that with the rotation of the drum the granulated plastic material is transported towards the outlet and with the centrifugal force exerted, the material is transported on the perforated drum, which holds the granulated plastic material and removes the water, while simultaneously the tilted blades move the granulated plastic material towards the outlet.

### E) Material inlet system

The inlet system comprises of a flange with thickness of 5mm. On the flange there are "shoulders" that enable the drum placement.

The material is inserted from a hopper with a curved shape, which is located on the flange and drives the granulated plastic material smoothly to the internal perforated drum, which is moving by the rotation system.

It is preferably manufactured by stainless steel INOX 304.

### F) Material outlet system

The outlet system comprises a flange with thickness 5mm. On the flange there are "shoulders" that enable the drum placement.

The outlet of the material is carried out from a hopper which is located at the lower part of the flange and drives the granulated plastic material to the air-transportation system. It is manufactured from stainless steel INOX 304.

The whole structure has easy maintenance since as mentioned above all the parts are fastened with screws and are not compact, therefore they can easily be detached and changed in case the constructor thinks appropriate.

### vii. HEATED AIR-TRANSPORTATION SYSTEM

The heated air-transportation system (Figure 10) comprises:

### A) Pressure ventilator

The pressure ventilator is preferably manufactured by stainless steel INOX 304. Transmission is given from an electrical motor 3HP at 400VAC∼50Hz.

Its aim of operation is the production of air that will drive the material from the horizontal centrifugal drainer to the cyclone.

### B) Air heating system

On the ventilator are mounted three resistances of 6 kW each at 400VAC-50Hz, which are controlled by a thermostat.

Its a of operation is to heat the pipework and the cyclone through the hot air, so that after the granulated plastic material's transportation through the heated air-transportation system, the granulated plastic material be dry.

For the longer possible duration of drying, the transportation system of the clean material from the centrifugal drainer towards its collection, comprises pipework which are not in a straight line, but rather include many curves in a "zigzag" and/or helix shape, so that the path of the granulated plastic material inside the heated air-transportation system is increased without the need of large space. In this way, it is possible to decrease even further the humidity percentage of the granulated plastic material, even close to 0%.

### C) Material inlet system

The material inlet system is preferably manufactured from an air-duct ϕ110mm from INOX 304, on top of which there is a rotary airlock valve that drives the air to the pipework, while it simultaneously drives also the granulated plastic material that enters the pipework.

### D) Pipework

The whole structure has easy maintenance since as mentioned above all the parts are fastened with screws and are not compacted, therefore they can easily be detached and changed in case the constructor thinks appropriate.

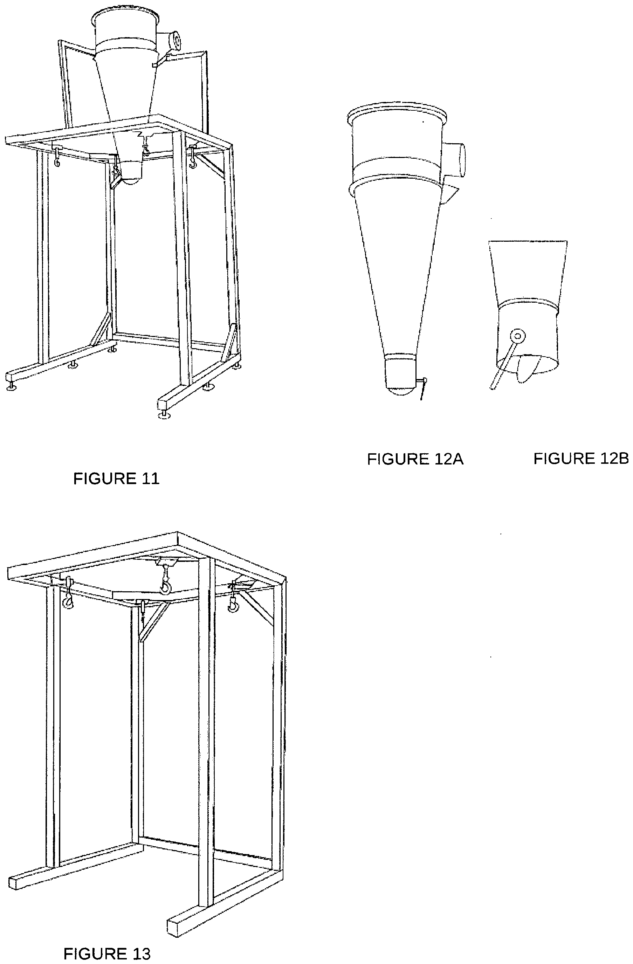

### viii. CYCLONE WITH BIG BAG SUPPORT TRUSS (Figure 11)

### A) Cyclone

The cyclone is the last part of the process line of the granulated plastic material (Figure 12A). This is where the granulated plastic material ends up after the air-transportation. Like all cyclones, its aim of operation is to separate air from the granulated plastic material.

When the material enters the cyclone, a vortex is created due to the existence of the cone. The vortex drives the air upwards together with the water vapour that has been created from the heat that the whole air-transportation system and the cyclone have,, while the heavy granulated plastic material falls downwards. The result is that the granulated plastic material is dry.

The cyclone is preferably manufactured from stainless steel INOX 304 and at its lower part, there is a neck where the big bag is fastened and at its lower part there is an INOX 304 butterfly valve that permits the interruption of the flow to the big bag and its removal until the change of the big bag.

### B) Big bag support truss

The support truss of the big bag (Figure 13) is the truss (base) on which the big bag is placed through its four hooks and is fastened to the neck of the cyclone. This truss is also the support of the cyclone, which is placed on it.

It is manufactured in one embodiment from steel hollow beams with cross section 80mm x 80mm and thickness 3mm. The hollow beams are connected with weldings. Furthermore, their dimensions are such to withstand to the loads and stresses that will be created from the total weight that will be placed.

Finally, in our example at the lower part there are six regulated slip resistant heavy type "shoes" that hold the total load and give the ability to regulate the height, in order for the whole structure to be leveled to the ground.

### IX. CONTROL PANEL

The assembly of the present invention may have a control panel, preferably at a central point of supervision of the process line of the granulated plastic material and inside the control panel there is an electrical circuit.

Externally there are all the necessary switches for the proper function and for the safety of the handling personnel. At a central point there area general "ON-OFF" switch with a safety key and an "Emergency Stop" button that immediately stop all functions. The "Emergency Stop" buttons exist at various places of the process line, whereever they are needed.

### Maintenance - cleaning

The whole granulated plastic material cleaning installation of this invention does not have special requirements for maintenance and cleaning. Due to frequent use there is a requirement for periodic and thorough cleaning. The cleaning of the granulated plastic material cleaning line may be done with compressed air and in some cases with water (washing structures, brushes, screws and drainer).

The maintenance and cleaning of the line is a very simple task that contributes to the flawless conservation of products and can achieve a long life and high efficiency of the machine.

## Claims

1. Assembly for the cleaning of packaging items that have been used for chemicals and pesticides, wherein the packaging items have been initially reduced to smaller pieces, i.e. granules, the said assemply comprising consecutively
- a washing structure with at least three mixing and conveying shafts, for the washing of the granules with a chemical cleaning fluid,
- a water washing structure,
- a horizontal centrifugal drainer for the granules,
- an air-transportation heated system for transportation of the granules from the drainer to their collection,
said assembly **characterised in that** it comprises consecutively
- brushes for the cleaning of the granules,
- a conveyor screw for the transportation of the granules from the brushes to a water washing structure,
- a screw for the transportation of the granules from the water washing structure to
the centrifugal drainer,
- a cyclone for the collection of the cleaned granules.

2. Assembly according to claim 1, wherein in the washing structure with the mixing and transportation shafts for the washing of the granules with a chemical cleaning fluid
- the shafts bear reels which in turn have flaps,
- part of each shaft during its rotation is below the surface of the cleaning fluid and part is above the surface,
- the first shaft has heating elements, or below the first shaft are heating elements, which heat the cleaning fluid,
- at least one shaft transports the granules and after that there is at least one shaft that plunges the granules into the water in a manner that the granules shall not float and in order for a better washing to be achieved,
- the last shaft has flaps with projections having the shape of a rake and removes the granules from the fluid's surface.

3. Assembly according to each one of claims 1 and 2, wherein the washing structure with the mixing and transportation shafts for the washing of the granules with chemical cleaning material
- comprises five shafts and specifically
- the first shaft for the transportation of fluid and granules is followed by a shaft for the plunging of the granules and both shafts have compact flaps,
- after that there is a new transportation shaft and new plunging shaft, both of which have perforated flaps which allow the fluid to pass through their apertures,
- the last shaft has on its flaps, at an angle, projected shafts with the shape of a rake that remove the granules from the surface of the fluid without removal of fluid from the washing structure.

4. Assembly according to each one of claims 1 to 3, wherein the movement of the shafts is alternating with direction from the first to the last shaft and then reversely with direction from the last to the first shaft of the washing structure and specifically with consecutive alternations.

5. Assembly according to each one of claims 1 to 4, wherein the brushes for the cleaning of the granules
- are at least two,
- each one rotates around a shaft and the shafts of two consecutive brushes rotate in an opposite direction, the one in respect to the other and
- they brush the granules for the removal of possible label residues, which have become soft through their course through the washing structure.

6. Assembly according to each one of claims 1 to 5, wherein the screw that removes the granules after the brushing and transports them from the brushes to the water washing structure has direction from down upwards, in such a manner so that the material may fall from above downwards inside the water washing structure.

7. Assembly according to each one of claims 1 to 6, wherein the water washing structure comprises three shafts wherein each one of them bear reels with flaps from which
- the first shaft has compact flaps and propels the material inside the water and it stirs it
- the second shaft has perforated flaps and stirs and plunges the material with a lower friction and
- the third shaft has on its flaps at an angle, shafts projected at an angle, in the shape of a rake so that they may propel the granulated plastic to the outlet with the lowest possible simultaneous removal of fluid from the reservoir,
- the direction of movement of the shafts alternates consecutively from the inlet to the outlet.

8. Assembly according to each of claims 1 to 7, wherein the screw which removes the granules and transports them from the water washing structure to the horizontal centrifugal drainer has direction from down upwards.

9. Assembly according to each one of claims 1 to 8, wherein the transportation system of the clean material from the centrifugal drainer to its collection comprises
- the application of hot air for drying and
- pipework not only in a straight line, but with multiple curves in a "zigzag" pattern and / or in a helix shape for a longer drying duration.

10. Assembly according to each one of claims 1 to 9, which ends to a collection bin of the granulated plastic, that may comprise a cyclone and a collection bag.

## Patentansprüche

1. Herstellung eines Geräts für das Reinigen von Verpackungsmaterial, das für Chemikalien und Pestiziden gebraucht worden ist, wo das Verpackungsmaterial anfangs in kleineren Teilen abmontiert wird, wie zum Beispiel in Granulaten, wobei die Herstellung umfasst
- ein Waschgerät mit mindestens drei Durchmischen- und Beförderungsschachten um den Granulaten mit einer chemischen Waschflüssigkeit zu waschen,
- ein Wasserwaschgerät,
- ein horizontales, zentrifugales Abtropfgitter für den Granulaten,
- ein gehitztes Luftbeförderungssystem um den Granulaten vom Abtropfgitter zur Sammlung zu transportieren,
wobei die Herstellung ist dadurch characterisiert, dass sie nacheinander umfasst
- Bürste um die Granulaten zu reinigen,
- eine Förderungsschraube um die Granulaten von den Bürsten zu dem Wasserwaschgerät zu transportieren,
- eine Schraube um die Granulaten vom Wasserwaschgerät zu einem zentrifugalen Abtropfgitter zu transportieren,
- eine Spirale für die Versammlung der gereinigten Granulaten.

2. Herstellung gemäß dem Anspruch 1, wobei in dem Waschgerät mit den Durchmischens- und Transportationsschachten für die Reinigung der Granulaten mit einer chemischen Waschflüssigkeit
- die Schachten haben Rollen, die Klappen tragen,
- ein Teil jedes Schachts ist während die Umdrehung unten der Oberfläche der Waschflüssigkeit und ein Teil über der Oberfläche,
- das erste Schacht hat Heizelementen oder unten dem ersten Schacht gibt es Heizelementen, die die Waschflüssigkeit heizen,
- mindestens ein Schacht transportiert die Granulaten und danach gibt es mindestens ein Schacht, das die Granulaten im Wasser taucht, in so eine Art dass die nicht oben bleiben und damit sie besser gereinigt werden,
- das letzte Schacht hat Klappen mit Vorsprüngen, die die Form einer Harke haben, und entfernt die Granulaten von der Oberfläche der Flüssigkeit.

3. Herstellung gemäß den Ansprüchen 1 und 2, wobei das Waschgerät mit den Durchmischens- und Transportationsschachten für die Reinigung der Granulaten mit einem chemischen Waschmaterial
- besteht aus fünf Schachten und insbesondere
- das erste Schacht für die Transportierung der Flüssigkeit und Granulaten wird von einem Schacht für das Tauchen der Granulaten gefolgt und beide Schachten kompakte Klappen haben,
- danach gibt es ein neues Transportierungsschacht und ein neues Tauchensschacht und beide perforierte Klappen haben und deswegen die Flüssigkeit durch ihre Öffnungen läuft,
- das letzte Schacht hat auf seinem Klappen schräg hervorragende Schachte in der Form einer Harke, die die Granulaten aus der Oberfläche der Flüssigkeit entfernen ohne die Flüssigkeit von dem Waschgerät zu entfernen.

4. Herstellung gemäß den Ansprüchen 1 bis 3, wobei die Bewegung der Schachten abwechselt mit Richtung vom ersten Schacht auf dem letzten und danach umgekehrt vom letzten Schacht auf dem ersten Schacht des Waschgerätes und insbesondere mit aufeinanderfolgenden Wechsel.

5. Herstellung gemäß den Ansprüchen 1 bis 4, wobei die Bürsten für das Reinigen der Granulaten
- mindestens zwei sind,
- jede Bürste den Schacht herum rotiert und die Schachten von zwei aufeinanderfolgender Bürsten rotieren in der entgegengesetzte Richtung, im Bezug zu einander,
- sie bürsten die Granulaten und entfernen mögliche Etikettresten, die weich wegen des Waschgerätes sind.

6. Herstellung gemäß den Ansprüchen 1 bis 5, wobei die Schraube, die die Granulaten nach das Reinigen entfernt und sie von den Bürsten zu dem Wasserwaschgerät transportiert, eine Richtung nach oben hat, so dass das Material nach unten im Wasserwaschgerät hinfallen kann.

7. Herstellung gemäß den Ansprüchen 1 bis 6, wobei das Wasserwaschgerät aus drei Schachten besteht, wobei jedes Schacht Rollen mit Klappen haben und davon
- das erste kompakte Rollen hat und das Material im Wasser an treibt und es umrührt,
- das zweite perforierte Klappen hat, das Material mit geringeren Reibung taucht und rührt es um,
- das dritte Schacht hat Klappen schräg, Schachten schräg in der Form einer Harke um das granuliertes Kunststoff im Ausgang zu antreiben und gleichzeitig das niedrigste Menge der Flüssigkeit aus dem Reservoir zu entfernen,
- die Richtung der Bewegung der Schachten wechselt fortlaufend vom Zuleitungsrohr zu dem Ausgang ab.

8. Herstellung gemäß den Ansprüchen 1 bis 7, wobei die Schraube, die die Granulaten entfernt und sie vom Wasserwachgerät zu dem horizontalen, zentrifugalen Abtropfgitter transportiert, eine Richtung von unten nach oben hat.

9. Herstellung gemäß den Ansprüchen 1 bis 8, wobei das Transportierungssystem des gereinigten Materials umfasst
- die Anwendung von einem fliegendem Luftbeförderungssystem und
- ein Rohrnetz nicht nur lineares, sondern auch mit zahlreichen Kurven in einem Zickzack Muster und/oder in der Form der Spirale für ein längeres Abtrockenprozess.

10. Herstellung gemäß den Ansprüchen 1 bis 9, wobei es in einem Sammlungsbehälter der granulierten Kunststoffs endet, der einer Zyklone und einem Versammlungssack umfassen kann.

## Revendications

1. Assemblage pour nettoyage d' articles d'emballage qui ont étés utilisés pour des produits chimiques et des pesticides, ou les articles d'emballage ont été initialement réduits en morceaux plus petits, par exemple des granules, cet assemblage comprenand consécutivement:
- une structure de lavage qui contient au moins trois arbres mélangeurs et transporteurs, afin de laver les granules avec un liquide nettoyant chimique,
- une structure de nettoyage à l'eau,
- un égouttoir centrifuge horizontal pour les granules,
- un système chauffé de transportation d'air pour amener les granules de l'égouttoir à leur collection,
le dit assemblage etant characterise du fait qu'il comprend a' la suite
- des brosses de nettoyage des granules,
- une vis de transport pour amener les granules des brosses à la structure de nettoyage à l'eau,
- une vis pour le transport des granules de la structure de nettoyage à l'eau à l'égouttoir centrifuge,
- un tourbillon pour ramasser les granules nettoyées.

2. Assemblage selon la revendication 1, où dans la structure de lavage avec les arbres mélangeurs et transporteurs pour lavage des granules avec un liquide nettoyant chimique
- les arbres portent des bobines équipées de volets,
- pendant son opération une partie de chaque arbre se trouve au-dessous de la surface du liquide nettoyant et une partie au-dessus de sa surface,
- le premier arbre possède des éléments de chauffage, ou au-dessous du premier arbre il y a des éléments de chauffage, qui réchauffent le liquide nettoyant,
- au moins un arbre transfère les granules et après ça il y a au moins un arbre qui plonge les granules dans l'eau d'une manière afin que les granules ne flottent pas et pour que le nettoyage soit bien réalisé.
- le dernier arbre possède des volets avec projection qui prend la forme de peigne qui enlève les granules de la surface du liquide.

3. Assemblage selon chacune des revendications 1 et 2, où la structure de lavage avec les arbres mélangeurs et transporteurs pour lavage des granules avec un matériaux nettoyant chimique
- contient cinq arbres et plus précisément,
- le premier arbre de transportation du liquide et de granules est suivi d'un arbre de plongeon de granules et tous les deux arbres portent des volets compacts,
- après ça il y a un nouvel arbre de transportation et un nouvel arbre de plongeon et tous les deux portent des volets perforés qui permettent au liquide de passer entre leurs ouvertures,
- le dernier arbre porte des arbres projetés anglés sur ses volets qui prennent la forme d'un peigne qui enlève les granules de la surface du liquide sans eloigner le liquide de la structure de lavage.

4. Assemblage selon chacune des revendications 1 a' 3, où le mouvement des arbres est alternatif et dirigé avec direction du premier vers le dernier arbre et après renversé avec direction du dernier vers le premier arbre de la structure de lavage et plus précisément avec des altérations consécutives.

5. Assemblage selon chacune des revendications 1 a' 4, où les brosses de lavage des granules
- sont au moins deux,
- chacune tourne autour d'un arbre et les arbres de deux brosses consécutives tournent vers une direction opposée, l'une en relation a' l'autre et
- brossent les granules afin d'enlever tout résidu d'etiquetage possible qui est devenu moux pendant le cycle de lavage dans la structure de lavage.

6. Assemblage selon chacune des revendications 1 a' 5, ou la vis qui emporte les granules après le brossage et les transfère depuis les brosses à la structure de lavage à l'eau, est en direction du bas vers le haut, d'une manière que le matériel peut tomber de haut vers le bas et dans la structure de lavage à l'eau.

7. Assemblage selon chacune des revendications 1 a' 6, où la machine de lavage à l'eau comporte trois arbres et chacun de ceux-ci porte des bobines équipées de volets desquels
- le premier arbre possède des volets compacts qui propulsent le matériel dans l'eau et ils le remuent,
- le deuxième arbre possède des volets perforés et plonge et propulse le matériel en frottement inférieur et
- le troisième arbre est équipé de volets anglés qui prennent la forme de peigne afin de propulser le plastic granulé vers la sortie avec le moins possible d'enlevage simultané de liquide du réservoir,
- la direction du mouvement des arbres est consécutivement inversée de l'entrée vers la sortie.

8. Assemblage selon chacune des revendications 1 a' 7, où la vis qui enlève les granules et les transfère de la structure de nettoyage à l'eau vers l'égouttoir centrifuge horizontal a une direction du bas vers le haut.

9. Assemblage selon chacune des revendications 1 a' 8, où le système de transport des matériaux propres de l'égouttoir centrifuge vers leur collection comprend
- l'application de séchage à l'air chaud et
- tuyauterie pas seulement en ligne droite, mais en courbes multiples d'une forme de «zigzag» et/ou d'hélice pour une durée de séchage prolongée.

10. Assemblage selon chacune des revendications 1 a' 9 qui finit à une cuve collectrice du plastic granulé qui peut comprendre un cyclone et un sac collecteur.
